# FASCICULE DE BREVET EUROPEEN

(11) **EP 0 404 665 B1**
(45) Date de publication et mention de la délivrance du brevet: **09.03.1994**
(21) Numéro de dépôt: 90401727.4
(22) Date de dépôt: 19.06.1990
(51) Int. Cl.: B60N 2/06

(54) **Perfectionnements aux mécanismes de réglage en position longitudinale de sièges de véhicules**
Mechanismen zur Längsverstellung von Fahrzeugsitzen
Improvements in mechanisms for changing the longitudinal position of vehicle seats

(30) Priorité: 22.06.1989 FR 8908334
(43) Date de publication de la demande: 27.12.1990
(73) Titulaire: BERTRAND FAURE AUTOMOBILE, F-78391 Bois d'Arcy Cédex (FR)
(72) Inventeur: Pezier, Yves, F-91150 Etampes (FR); Rochepeau, Pierre, F-91150 Etampes (FR); De Seroux, Nicolas, F-69007 Lyon (FR)
(74) Mandataire: Behaghel, Pierre

(56) Documents cités:
- EP-A- 0 277 069
- DE-A- 3 502 345
- FR-A- 2 229 293
- GB-A- 2 016 213
- US-A- 3 617 021

## Description

L'invention est relative aux mécanismes pour régler la position longitudinale d'un siège de véhicule par rapport à une embase sur laquelle ledit siège est monté de façon à pouvoir coulisser ou rouler en avance ou recul selon une direction "longitudinale".

Elle vise plus particulièrement, parmi ces mécanismes, ceux qui comprennent un écrou monté sur l'embase de façon à présenter son axe selon la direction longitudinale du siège et à être lié axialement et angulairement mais non transversalement, à l'embase, une vis montée sur l'ossature du siège de façon à être liée axialement et transversalement, mais non angulairement, à cette ossature et coopérant avec l'écrou, une roue tangente angulairement solidaire de la vis, une vis sans fin coopérant avec la roue tangente et montée sur l'ossature du siège et des moyens de commande pour entraîner la vis sans fin dans l'un ou l'autre de ses deux sens de rotation possibles, la roue tangente étant montée sur la vis, coaxialement à celle-ci, et l'ensemble constitué par la vis et par la roue tangente étant monté à ses deux extrémités sur l'ossature du siège à l'aide de deux paliers dont l'un est porté par un même bâti rigide que la vis sans fin.

Dans des modes de réalisation, desdits mécanismes, connus par le document EP-A-0 277 069 et correspondants au préambule de la revendication 1, l'ensemble constitué par la vis et la roue tangente, alors solidaires l'une de l'autre, est monté entre deux paliers prolongés par des pointes et disposés aux deux extrémités de cet ensemble.

Vu les tolérances relativement larges qui sont couramment admises dans la construction des sièges de véhicules, la position de la portion, dudit ensemble, qui se trouve au niveau de la vis sans fin, n'est pas définie avec une grande précision.

Or la tolérance admise sur la distance entre l'axe de cette vis sans fin et celui de la roue tangente associée est extrêmement rigoureuse, savoir de l'ordre de quelques centièmes de mm : si le jeu entre ces éléments est trop grand, il en résulte des claquements inadmissibles et si au contraire ledit jeu est trop petit, le fonctionnement du mécanisme se traduit par des échauffements locaux, voire par des coincements.

L'invention a pour but, surtout de supprimer ces inconvénients.

A cet effet, les mécanismes de réglage du genre en question selon l'invention sont essentiellement caractérisés en ce que le montage de la roue tangente sur la vis est effectué de façon telle que ces pièces puissent coulisser axialement l'une par rapport à l'autre et en ce que les deux paliers sont des rotules dont l'une, savoir celle qui est portée par le bâti rigide, est centrée au centre de la roue tangente.

Dans des modes de réalisation préférés, la roue tangente comprend un logement sphérique dans lequel est logée jointivement une boule elle-même traversée jointivement par une extrémité d'une tige rigide dont l'autre extrémité est encastrée en porte-à-faux dans le bâti support de la vis sans fin, un jeu annulaire suffisant étant réservé autour des portions, de la tige, sortant de la boule, pour rendre possibles les oscillations de la roue tangente par rapport à la tige.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en coupe verticale axiale un mécanisme à vis permettant de régler la position longitudinale d'un siège de véhicule, mécanisme établi selon l'invention.

La figure 2 montre semblablement à plus grande échelle la portion de gauche dudit mécanisme.

La figure 3 est une coupe transversale partielle du même mécanisme selon III-III, figure 2.

D'une façon connue en soi, le siège de véhicule dont on désire régler la position longitudinale, c'est-à-dire en avance ou recul, est monté sur au moins une glissière horizontale longitudinale comprenant un profilé inférieur 1 solidarisable avec le plancher du véhicule et un profilé supérieur propre à supporter l'ossature 2 du siège, dont il est solidaire, et monté de façon à pouvoir coulisser le long du profilé inférieur 1.

Les réglages désirés de position longitudinale sont assurés en déplaçant le profilé supérieur le long du profilé inférieur.

Le mécanisme de réglage comprend à cet effet :
- un écrou 3 d'axe horizontal X parallèle à la direction longitudinale de la glissière et solidarisé longitudinalement avec le profilé inférieur 1, notamment par son logement dans une cage 4 prolongée vers le bas par deux pattes 5 serties sur ledit profilé inférieur 1, ce logement étant effectué de façon telle que l'écrou puisse flotter transversalement dans la cage, aussi bien verticalement qu'horizontalement, mais sans jeu axial ou longitudinal, et sans liberté de déplacement angulaire,
- une vis ou tige filetée 6 traversant l'écrou 3 et propre à coopérer avec celui-ci, vis montée sur l'ossature 2 de façon à être solidarisée axialement et transversalement, mais non angulairement, avec cette dernière,
- une roue tangente 7 rendue coaxiale à ladite vis tout en permettant les coulissements axiaux relatifs entre cette roue 7 et cette vis 6, ce montage étant réalisé par emmanchement d'un embout cylindrique cannelé 8 prolongeant la vis dans un manchon cannelé complémentaire 9 solidaire de la roue,
- une vis sans fin 10 d'axe Y propre à coopérer avec la roue 7 et montée sur l'ossature 2,
- et des moyens propres à commander à volonté les rotations de cette vis sans fin 10.

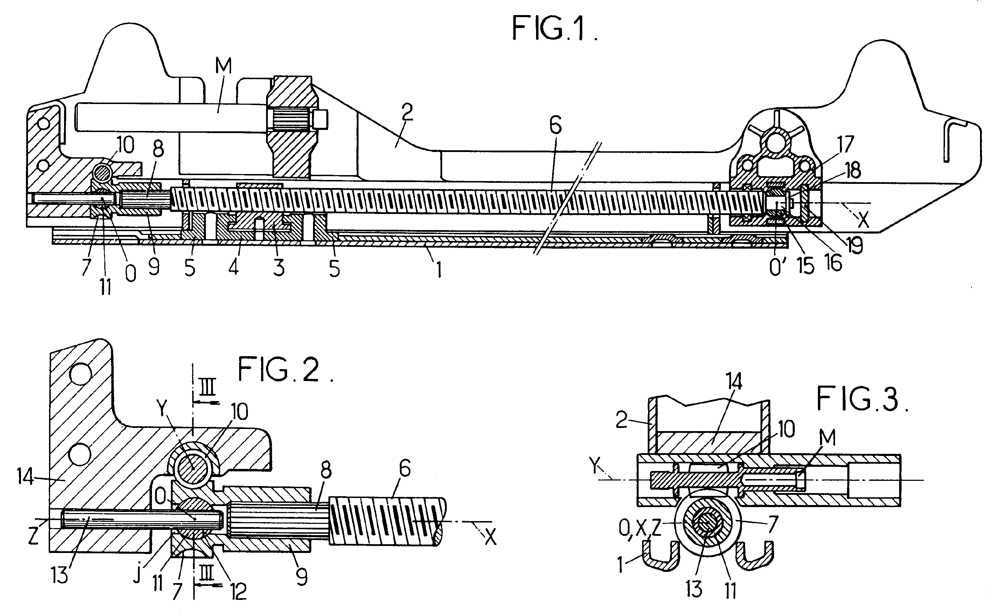

Ces moyens de commande pourraient être constitués par une manette facilement accessible de l'usager du siège assis sur celui-ci, mais ils sont de préférence constitués par un ensemble motoréducteur électrique partiellement représenté en M sur les figures 1 et 3.

Pour monter sur l'ossature 2 l'ensemble constitué par la vis 6 et par la roue 7, on a recours, non pas à des paliers ou pointes localisés aux deux extrémités d'un tel ensemble, mais à deux rotules dont l'une est localisée à l'aplomb de l'axe Y de la vis sans fin 10, et dont l'autre est disposée à l'extrémité, de la vis 6, la plus éloignée de cette vis sans fin.

La première rotule est constituée par une boule 11 disposée jointivement dans un logement sphérique 12 évidé à l'intérieur de la roue tangente 7 de façon telle que le centre O de ce logement coïncide avec le centre de cette roue.

La boule 11 est traversée jointivement par une extrémité d'une tige cylindrique rigide 13 dont l'autre extrémité est encastrée dans un bâti rigide 14 solidaire de l'ossature 2, un jeu j suffisant étant réservé dans la roue tangente 7 autour des portions, de ladite tige 13, qui sortent de la boule 11 pour rendre possibles les légères oscillations de la pièce 6-7 autour du centre O.

Le bâti 14, réalisé notamment en une matière plastique dure, est évidé par un logement propre à recevoir sans jeu la vis sans fin 10 ou plus précisément des portions lisses de révolution de cette vis sans fin de façon telle que la position de cette dernière soit définie avec précision par rapport au centre O.

La rotule disposée à l'autre extrémité de la vis 6 est constituée par une boule 15 évidée diamétralement par un alésage cylindrique et emmanchée jointivement sur un embout cylindrique 16 terminant ladite vis 6.

Cette boule 15 est elle-même disposée jointivement dans un logement sphérique complémentaire de centre O' évidé dans une coquille 17 solidaire de l'ossature 2, et l'immobilisation axiale de cette boule 15 -et donc de l'extrémité correspondante de la vis 6- par rapport à ladite coquille 17 est obtenue par une rondelle 18 rivetée sur l'embout 16.

Enfin une plaque transversale 19 mécaniquement résistante est solidement ancrée dans la coquille 17, un peu au-delà de l'extrémité libre de l'embout 16 de façon à former une butée axiale pour la vis 6, butée s'opposant à la projection horizontale de l'ossature 2 vers la gauche sur le dessin dans le cas d'une collision faisant sortir la boule 15 de son logement.

Avec un tel montage, l'ensemble vis 6-roue 7 peut subir des variations d'inclinaison autour des deux centres O et O' des deux rotules, ce qui peut décaler angulairement l'axe X de cet ensemble par rapport à l'axe Z de la tige 13.

Malgré ce décalage, la distance entre l'axe Y de la vis sans fin 10 et le centre O de la roue tangente 7 demeure rigoureusement constante.

Cette distance peut être réglée une fois pour toutes avec la grande précision nécessaire, laquelle peut approcher le 1/100 de mm, en conférant au bâti 14 la forme exacte désirée lors de son moulage et sans qu'aucune autre précaution soit requise : ce réglage est ensuite conservé au cours de toute la vie du mécanisme malgré la rudesse avec laquelle ce mécanisme est souvent traité de la part des usagers.

Il en résulte que la commande des rotations de la vis 6 est toujours obtenue avec facilité sans risque d'échauffements, de coincements ou de bruits.

Comme il va de soi, et comme il résulte d'ailleurs déjà de ce qui précède, l'invention ne se limite nullement à ceux, de ses modes d'application et de réalisation, qui ont été plus spécialement envisagés ; elle en embrasse, au contraire, toutes les variantes, telle que définies dans les revendications.

## Revendications

1. Mécanisme pour régler la position longitudinale d'un siège de véhicule par rapport à une embase sur laquelle ledit siège est monté de façon à pouvoir coulisser ou rouler en avance ou recul selon une direction "longitudinale", comprenant un écrou (3) monté sur l'embase (1) de façon à présenter son axe selon la direction longitudinale du siège et à être lié axialement et angulairement, mais non transversalement, à l'embase, une vis (6) montée sur l'ossature (2) du siège de façon à être liée axialement et transversalement, mais non angulairement, à cette ossature et coopérant avec l'écrou, une roue tangente (7) angulairement solidaire de la vis, une vis sans fin (10) coopérant avec la roue tangente et montée sur l'ossature du siège et des moyens de commande (M) pour entraîner la vis sans fin dans l'un ou l'autre de ses deux sens de rotation possibles, la roue tangente (7) étant montée sur la vis (6), coaxialement à celle-ci, et l'ensemble constitué par la vis et par la roue tangente étant monté à ses deux extrémités sur l'ossature du siège à l'aide de deux paliers dont l'un est porté par un même bâti rigide (14) que la vis sans fin (10), caractérisé en ce que le montage de la roue tangente (7) sur la vis (6) est effectué de façon telle que ces pièces puissent coulisser axialement l'une par rapport à l'autre, et en ce que les deux paliers sont des rotules (11,12; 15,16) dont l'une, savoir celle (11,12) qui est portée par le bâti rigide ci-dessus (14), est centrée au centre de la roue tangente (7).

2. Mécanisme selon la revendication 1, caractérisé en ce que la roue tangente (7) comprend un logement sphérique (12) dans lequel est logée jointivement une boule (11) elle-même traversée jointivement par une extrémité d'une tige rigide (13) dont l'autre extrémité est encastrée en porte-à-faux dans le bâti (14) support de la vis sans fin (10), un jeu annulaire (j) suffisant étant réservé autour des portions, de la tige, sortant de la boule, pour rendre possibles les oscillations de la roue tangente (7) par rapport à la tige (13).

## Patentansprüche

1. Vorrichtung zum Einregulieren der Stellung eines Kraftfahrzeugsitzes in Längsrichtung gegenüber einer Unterlage, an der der Sitz so befestigt ist, daß er gleitend oder rollend nach vorn oder hinten in Längsrichtung verschiebbar ist, die aus folgenden Teilen besteht: einer Mutter (3), die an der Unterlage (1) so befestigt ist, daß ihre Achse in Längsrichtung des Sitzes verläuft und daß sie axial und winklig, jedoch nicht in Querrichtung mit der Unterlage verbunden ist, einer Schraube (6), die an dem Gestell (2) des Sitzes so angebracht ist, daß sie axial und in Querrichtung, jedoch nicht winklig mit diesem Gestell verbunden ist und mit der Mutter zusammenwirkt, einem Schneckenrad (7), das winklig mit der Schraube verbunden ist, einer Schnecke (10), die mit dem Schneckenrad zusammenwirkt und an dem Gestell des Sitzes befestigt ist und Steuereinrichtungen (M),um die Schnecke in der einen oder der anderen der beiden möglichen Drehrichtungen anzutreiben, wobei das Schneckenrad (7) an der Schraube (6) koaxial zu dieser angebracht und die aus der Schraube und dem Schneckenrad bestehende Einrichtung an ihren beiden Enden an dem Gestell des Sitzes mittels zweier Lager befestigt ist, von denen eins von dem gleichen starren Tragelement (14) gehalten wird, wie die Schnecke (10), dadurch gekennzeichnet, daß die Befestigung des Schneckenrades (7) an der Schraube (6) in der Weise erfolgt, das diese Teile sich axial zueinander verschieben können und daß die beiden Lager Kugelgelenke (11, 12; 15, 16) sind, von denen eins, nämlich das Kugelgelenk (11, 12), das durch das starre Tragelement (14) gehalten wird, auf den Mittelpunkt des Schneckenrades (7) zentriert ist.

2. Vorrichtung nach Anspruch 1, dadurch gekennzeichnet, daß das Schneckenrad (7) ein sphärisches Lager (12) enthält, in dem eine Kugel (11) dicht angeordnet ist, durch die dicht ein Ende der starren Stange (13) geführt ist, deren anderes Ende fliegend in das Tragelement (14) der Schnecke (10) eingesetzt ist, wobei um die Abschnitte der Stange, die aus der Kugel austreten, ein ausreichendes Spiel (j) freigehalten ist, um Schwingungen des Schneckenrades (7) in bezug auf die Stange (13) zuzulassen.

## Claims

1. Mechanism for adjusting the longitudinal position of a vehicle seat with respect to a base on which the said seat is mounted so as to be able to slide or roll forwards or backwards in the "longitudinal" direction, comprising a nut (3) mounted on the base (1) so as to have its axis in the longitudinal direction of the seat and be connected axially and angularly, but not transversely, to the base, a screw (6) mounted on the framework (2) of the seat so as to be connected axially and transversely, but not angularly, to this framework and cooperating with the nut, a worm wheel (7) fixed to the screw with respect to angular movement, a worm screw (10) cooperating with the worm wheel and mounted on the framework of the seat and control means (M) to drive the worm screw in one or other of its two possible directions of rotation, the worm wheel (7) being mounted on the screw (6), coaxially with the latter, and the unit formed by the screw and worm wheel being fixed at both ends to the framework of the seat by means of two bearings, one of which is carried by the same rigid structure (14) as the worm screw (10), characterised in that the mounting of the worm wheel (7) on the screw (6) is carried out in such a way that these parts can slide axially with respect to each other, and in that the two bearings are ball joints (11, 12; 15, 16), one of which, ie the one (11, 12) which is carried by the above rigid framework (14), is centred on the centre of the worm wheel (7).

2. Mechanism according to Claim 1, characterised in that the worm wheel (7) comprises a spherical seating (12) in which is seated contiguously a ball (11) which itself has passing through it contiguously one end of a rigid rod (13), the other end of which is embedded, so as to project, in the structure (14) supporting the worm screw (10), sufficient annular clearance (j) being allowed around parts of the rod, coming out of the ball, to enable the worm wheel (7) to rock with respect to the rod (13).
